# EUROPEAN PATENT APPLICATION

(11) **EP 4 269 638 A1**
(43) Date of publication of application: **01.11.2023**
(21) Application number: 21910650.7
(22) Date of filing: 17.12.2021
(51) Int. Cl.: C22C 21/00, C22C 21/02, C22C 21/12, C22C 1/04, B22F 3/10, B22F 1/00, B22F 1/14, B22F 10/14

(54) **ALUMINUM POWDER MIXTURE AND METHOD FOR PRODUCING ALUMINUM SINTERED BODY**

(30) Priority: 23.12.2020 JP 2020213472
(71) Applicant: Mitsubishi Materials Corporation, Tokyo 100-8117 (JP)
(72) Inventor: KATO, Jun, Saitama-shi, Saitama 330-8508 (JP)
(74) Representative: Hoffmann Eitle
(86) International application number: PCT/JP2021/046827
(87) International publication number: WO 2022/138505

(57) **Abstract**

This aluminum powder mixture is obtained by mixing a starting material powder, which is composed of pure aluminum or an aluminum alloy, with 5% by mass to 30% by mass of an aluminum alloy powder that has a lower melting point than the pure aluminum or the aluminum alloy. The aluminum alloy powder is composed of an aluminum alloy which has a composition that contains 5% by mass to 20% by mass of at least one of Si and Cu, and 0.2% by mass to 2.0% by mass of Mg, with a balance of aluminum and unavoidable impurities. Consequently, sintering among the aluminum powders is accelerated and it is possible to obtain an aluminum sintered body that has a higher density and a high electrical conductivity as well as obtaining a high thermal conductivity.

## Description

### TECHNICAL FIELD

The present invention relates to an aluminum powder mixture and a method for producing an aluminum sintered body.

Priority is claimed on Japanese Patent Application No. 2020-213472 filed December 23, 2020, the content of which is incorporated herein by reference.

### BACKGROUND ART

Aluminum members have characteristics such as being light weight and having high thermal conductivity and are thus widely used as materials for heat exchangers; however, in order to further improve heat dissipation characteristics, there is a demand for the design and manufacture of complex shapes that enable more efficient heat exchange.

Meanwhile, using a powder metallurgy method, it is possible to manufacture a shape close to a final form using a mold (near net shape) thus making it possible to impart shapes at a low cost; however, in application to aluminum, there is a problem in the related art in that sintering is difficult due to an oxide coating film generated on the aluminum surface.

In recent years, the binder jet method has attracted attention as one technique for lamination molding using metal powders. In the above method, a binder containing a thermosetting resin, a thermoplastic resin, or a photo-curing resin is selectively sprayed from a print head onto a metal powder layer and the metal powder layer is repeatedly laminated to obtain a metal powder green body solidly fixed to a desired three-dimensional shape, followed by performing steps for solidly fixing the binder, removing unnecessary powder, degreasing, and sintering to obtain a three-dimensional metal modeling object.

This binder jet method has advantages over the existing Powder Bed Fusion (PBF) method and Directed Energy Deposition (DED) method, such as high precision, high productivity, and high recyclability of the raw material powder.

On the other hand, in this method, it is also necessary to carry out a sintering step to obtain the final modeling object, thus, in the same manner as the powder metallurgy method, there is a problem in that, when applied to aluminum, the sintering properties are poor. In addition, since molding in accordance with plastic deformation, which is possible with the powder metallurgy method, is difficult, there is a demand for better sintering properties than with the powder metallurgy method.

As techniques to solve the problem of the oxide coating film on aluminum, for example, a technique using preforms with pressure molding as described in Patent Document 1 below and a technique for densification in a pre-sintering molding step using metal injection molding as described in Patent Document 2 have been disclosed. In addition, techniques for improving sintering properties have been disclosed, such as a technique for applying a fine powder of approximately several µm having excellent sintering properties, as described in Patent Document 3.

Meanwhile, as techniques in the related art for metal injection molding methods using binders, Patent Document 2 and Patent Document 3 disclose techniques for metal additive manufacturing using binders.

### CITATION LIST

### [Patent Documents]

[Patent Document 1]
   Japanese Unexamined Patent Application, First Publication No. H01-294833
[Patent Document 2]
   Published Japanese Translation No. 2013-524006 of the PCT International Publication
[Patent Document 3]
   Japanese Unexamined Patent Application, First Publication No. 2004-308004

### SUMMARY OF INVENTION

### Technical Problem

However, according to the techniques disclosed in Patent Document 1 and Patent Document 2, there was a problem in terms of productivity since pressure is necessary after filling a metal mold. In addition, in the technique using a fine powder disclosed in Patent Document 3, when a fine aluminum powder with light specific gravity is used, it is considered that quality degradation and safety problems may occur due to scattering during the filling.

In addition, in the binder jet method described above, it is difficult to apply a high pressure so as to accompany plastic deformation during powder lamination, thus, it is difficult to apply the sintering methods used in the metal mold molding and metal injection molding of the related art as they are. In addition, since powder lamination is performed repeatedly, there is a demand for stable fluidity and filling properties in the raw material powder, thus, it is also difficult to apply fine powders that are greatly influenced by aggregation and scattering.

Therefore, the inventors studied sintering techniques using aluminum powder and found that a powder in which an aluminum powder having a predetermined particle size is mixed with an aluminum alloy powder that has a low melting point in a predetermined mass ratio may be used as a raw material powder. It was found that using this raw material powder makes it possible to improve the sintering properties and achieve high density even without pressure, thereby completing the invention of the present application.

The present invention was created in consideration of the circumstances described above and has an object of providing a technique that makes it possible to further accelerate sintering between aluminum powders, to achieve high density and high electrical conductivity in aluminum sintered bodies, and to obtain high thermal conductivity.

### Solution to Problem

(1) One aspect of an aluminum powder mixture according to the present invention is an aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy, and the aluminum alloy powder is composed of an aluminum alloy which has a composition that contains 5% by mass or more and 20% by mass or less of one or two of Si and Cu, and 0.2% by mass or more and 2.0% by mass or less of Mg, with a balance of aluminum and unavoidable impurities.

With the aluminum powder mixture in which an appropriate amount of aluminum alloy powder that has a lower melting point than the starting material powder is added to the starting material powder, a liquid phase is first generated from the aluminum alloy powder that has a low melting point during sintering and the liquid phase wetly spreads with respect to the starting material powder. The aluminum alloy powder that has a low melting point includes an appropriate amount of Si and Cu so as to reliably be a powder that has a lower melting point than the starting material powder. The aluminum alloy powder that has a lower melting point than the starting material powder includes an appropriate amount of Mg so as to improve the sintering properties.

(2) In the aluminum powder mixture according to one aspect of the present invention, a difference in melting point between the starting material powder composed of pure aluminum or an aluminum alloy and the aluminum alloy powder that has a lower melting point than the pure aluminum or the aluminum alloy, which form the aluminum powder mixture, is preferably 40°C or more.

By having a difference in melting point of 40°C or more, a liquid phase is first generated from the aluminum alloy powder that has a low melting point during sintering and the liquid phase reliably wetly spreads with respect to the starting material powder. For this reason, the sintering properties are improved.

(3) In the aluminum powder mixture according to one aspect of the present invention, the aluminum alloy forming the aluminum alloy powder preferably includes 0.1% by mass or more and 1.0% by mass or less of Bi.

Including an appropriate amount of Bi in the aluminum alloy forming the aluminum alloy powder that has a lower melting point than the starting material powder makes it possible to further increase the effect of improving the sintering properties by including an appropriate amount of Mg as described above.

(4) In the aluminum powder mixture according to one aspect of the present invention, a volume median diameter (D50) of both the starting material powder and the aluminum alloy powder is preferably 12 µm or more and 50 µm or less.

When the starting material powder and the aluminum alloy powder have particle diameters in the range described above, segregation of particles is less likely to occur and it is possible to increase the filling density of the powder. In addition, it is possible to provide an aluminum powder mixture with which it is possible to make shrinkage uniform during sintering, with which uneven sintering shrinkage is suppressed, and with which it is possible to hold a target shape in a case of making a sintered body by speeding up the rate of progress during sintering.

(5) In the aluminum powder mixture according to one aspect of the present invention, a concentration of oxygen included in the starting material powder composed of pure aluminum or aluminum alloy and the aluminum alloy powder is preferably 1.0% by mass or less.

With this level of oxygen concentration, it is possible to provide an aluminum powder mixture for which, even if there is an oxide coating film on the surface of the starting material powder composed of aluminum alloy and on the surface of the aluminum alloy powder, the effect of the oxide coating film is reduced and the sintering properties are favorable as a result.

(6) The aluminum powder mixture according to one aspect of the present invention is preferably a raw material powder for powder metallurgy.

(7) The aluminum powder mixture according to one aspect according to the present invention is preferably a raw material powder for metal additive manufacturing.

When the aluminum powder mixture described above is a raw material powder for powder metallurgy, in a case of being used for powder metallurgy, it is possible to reliably generate a liquid phase first from the aluminum alloy powder that has a low melting point during sintering, the liquid phase wetly spreads between starting material powder that have high melting points, and it is possible to obtain a well-shaped sintered body having a high relative density.

When the aluminum powder mixture described above is a raw material powder for metal additive manufacturing, in a case of being used for lamination molding, it is possible to reliably generate a liquid phase first from the aluminum alloy powder that has a low melting point during sintering, the liquid phase wetly spreads between starting material powder that have high melting points, and it is possible to obtain a metal laminated modeling object as a well-shaped sintered body having a high relative density.

(8) In a method for producing an aluminum sintered body according to one aspect of the present invention, an aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy, is used as a raw material powder.

The aluminum alloy powder is composed of an aluminum alloy that has a composition that contains 5% by mass or more and 20% by mass or less of one or two of Si and Cu, and 0.2% by mass or more and 2.0% by mass or less of Mg, with a balance of aluminum and unavoidable impurities.

In this production method, the aluminum powder mixture is used as a raw material powder and the raw material powder is filled into a mold without applying pressure accompanied by plastic deformation of the raw material powder and sintered in a vacuum atmosphere, in a reducing atmosphere, or in an inert gas atmosphere at a temperature of 580°C to 650°C.

In a case of sintering the raw material powder at 580°C to 650°C, with the aluminum powder mixture obtained by adding an appropriate amount of aluminum alloy powder that has a low melting point to the starting material powder, the liquid phase is generated first from the aluminum alloy powder that has a low melting point and the liquid phase wetly spreads with respect to the starting material powder. Including an appropriate amount of Si and Cu reliably gives the aluminum alloy powder that has a low melting point a melting point lower than that of the starting material powder. Due to the aluminum alloy powder that has a lower melting point than the starting material powder including an appropriate amount of Mg, the sintering properties are improved. For this reason, it is possible to obtain a well-shaped, dense sintered body having a high relative density.

(9) In the method for producing an aluminum sintered body according to another aspect of the present invention, an aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy, is used as a raw material powder.

The aluminum alloy powder is composed of an aluminum alloy which has a composition that contains 5% by mass or more and 20% by mass or less of one or two of Si and Cu, and 0.1% by mass or more to 2.0% by mass of Mg, with a balance of aluminum and unavoidable impurities.

In this production method, the aluminum powder mixture is used as a raw material powder and the raw material powder is press-molded using a metal mold and then sintered in a vacuum atmosphere, in a reducing atmosphere, or in an inert gas atmosphere at a temperature of 580°C to 650°C.

In a case where the raw material powder is sintered at 580°C to 650°C, with the aluminum powder mixture obtained by adding an appropriate amount of aluminum alloy powder that has a low melting point to the starting material powder, the liquid phase is generated first from the aluminum alloy powder that has a low melting point and the liquid phase wetly spreads with respect to the starting material powder. Including an appropriate amount of Si and Cu reliably gives the aluminum alloy powder that has a low melting point a melting point lower than that of the starting material powder. The aluminum alloy powder that has a lower melting point than the starting material powder includes an appropriate amount of Mg, which improves the sintering properties after press-molding. For this reason, it is possible to obtain a well-shaped, dense sintered body having a high relative density by press-molding.

(10) In the method for producing an aluminum sintered body according to yet another aspect of the present invention, an aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy, is used as a raw material powder.

The aluminum alloy powder is composed of an aluminum alloy which has a composition that contains 5% by mass or more and 20% by mass or less of one or two or more types of Si and Cu, and 0.1% by mass or more to 2.0% by mass of Mg, with a balance of unavoidable impurities and aluminum.

In this production method, the aluminum powder mixture is used as a raw material powder and a binder containing a thermosetting resin, a thermoplastic resin, or a photo-curing resin is selectively sprayed from a print head onto a metal powder layer and the metal powder layer including the binder is repeatedly laminated to obtain a metal powder green body solidly fixed to a desired three-dimensional shape, and then, after performing steps for solidly fixing the binder, removing unnecessary powder, and degreasing, the metal powder green body is sintered in a vacuum atmosphere, in a reducing atmosphere, or in an inert gas atmosphere at a temperature of 580°C to 650°C.

In a case where the raw material powder is sintered at 580°C to 650°C, with the aluminum powder mixture obtained by adding an appropriate amount of aluminum alloy powder that has a low melting point to the starting material powder, the liquid phase is generated first from the aluminum alloy powder that has a low melting point and the liquid phase wetly spreads with respect to the starting material powder. Including an appropriate amount of Si and Cu reliably gives the aluminum alloy powder that has a low melting point a melting point lower than that of the starting material powder. Due to the aluminum alloy powder that has a lower melting point than the starting material powder including an appropriate amount of Mg, the sintering properties of the metal powder green body solidly fixed to a desired three-dimensional shape are improved. For this reason, it is possible to obtain a well-shaped, dense sintered body having a high relative density due to the metal powder green body solidly fixed to a desired three-dimensional shape.

(11) In the method for producing an aluminum sintered body according to each of the above aspects of the present invention, an aluminum alloy sintered body having a relative density of 85% or more and a thermal conductivity of 160 W/mK or more is preferably obtained. When an aluminum powder mixture composed of the components described above is sintered in the temperature range described above, it is possible to obtain an aluminum alloy sintered body with a relative density of 85% or more and a thermal conductivity of 160 W/mK or more.

(12) In the method for producing an aluminum sintered body according to each of the above aspects of the present invention, the aluminum alloy forming the aluminum alloy powder preferably includes 0.1% by mass or more and 1.0% by mass or less of Bi.

Including an appropriate amount of Bi in the aluminum alloy forming the aluminum alloy powder that has a lower melting point than the starting material powder makes it possible to further increase the effect of improving the sintering properties by including an appropriate amount of Mg as described above.

### ADVANTAGEOUS EFFECTS OF INVENTION

According to the aluminum powder mixtures of each of the above aspects of the present invention, the liquid phase is generated first from the aluminum alloy powder that has a low melting point such that it is possible to supply the liquid phase between the starting material powder and to generate the liquid phase so as to wetly spread with respect to the starting material powder. Including appropriate amounts of Si and Cu reliably gives the aluminum alloy powder that has a low melting point a melting point lower than that of the starting material powder and makes it possible to reliably manifest the wetly spreading effect of the liquid phase. In addition, including an appropriate amount of Mg in the aluminum alloy powder that has a lower melting point than the starting material powder improves the sintering properties.

Due to the above, it is possible to further accelerate the sintering between the powders, to increase the density of the aluminum sintered body, and to obtain a sintered body that exhibits high electrical conductivity and high thermal conductivity.

### BRIEF DESCRIPTION OF DRAWINGS

FIG. 1 shows an example of an aluminum powder mixture and a sintering process thereof according to a first embodiment, (a) is a partially enlarged cross-sectional view showing a laminate of an aluminum powder mixture, (b) is an explanatory diagram showing a state in which the same laminate is sintered in a heating furnace, (c) is an explanatory diagram showing an overview of the obtained sintered body, and (d) is an explanatory diagram showing the state in which the sintered body is subjected to final processing.
FIG. 2 shows an example of the process of sintering an aluminum powder mixture, (a) is an explanatory diagram showing the aluminum powder mixture before sintering, (b) is an explanatory diagram showing a state in which the liquid phase wetly spreads in the middle of the sintering, and (c) is an explanatory diagram showing a state in which each powder is integrated to form a sintered body after the sintering.
FIG. 3 is a diagram showing an example of an equilibrium state diagram for predicting the amount of liquid phase to be produced during sintering.
FIG. 4 is a photograph showing an example of a sample having a small difference in outer diameter shrinkage in the Examples.
FIG. 5 is a photograph showing an example of a sample having a large difference in outer diameter shrinkage in the Examples.

### DESCRIPTION OF EMBODIMENTS

A detailed description will be given below of embodiments of the present invention, but the present invention is not limited to the embodiments described below.

The aluminum powder mixture according to the present embodiment is an aluminum powder mixture obtained by mixing a starting material powder, which is composed of pure aluminum or an aluminum alloy, with 5% by mass or more and 30% by mass or less of an aluminum alloy powder composed of an aluminum alloy that has a lower melting point than the pure aluminum or the aluminum alloy. In addition, the aluminum alloy powder is composed of an aluminum alloy having a composition that contains 5% by mass or more and 20% by mass or less of one or two of Si and Cu, and 0.2% by mass or more and 2.0% by mass or less of Mg, with a balance of unavoidable impurities and aluminum.

This aluminum alloy may contain 0.1% by mass or more and 1.0% by mass or less of Bi in addition to the content of the one or two of Si and Cu and of the Mg.

A description will be given below of the components of the aluminum alloy forming the aluminum alloy powder of the present embodiment.

### [One or two of Si and Cu: 5 to 20% by mass]

In the aluminum alloy forming the aluminum alloy powder, the content of the one or two of Si and Cu is preferably 5% by mass or more and 20% by mass or less. When the content of the one or two of Si and Cu is less than 5% by mass, there are concerns that a sufficient melting point lowering effect may not be obtained with respect to the pure aluminum, that a sufficient liquid phase may not be generated even if the temperature is raised to a predetermined temperature during sintering, and that sufficient sintering properties may not be obtained.

On the other hand, when the content of the one or two of Si and Cu exceeds 20% by mass, the added amounts of these elements are greater than the eutectic point on the equilibrium state diagram, thus, there are concerns that the melting point may increase, that a sufficient liquid phase may not be generated even if the temperature is raised to a predetermined temperature during sintering, and that sufficient sintering properties may not be obtained.

### [Mg: 0.2% by mass or more and 2.0% by mass or less]

The aluminum alloy forming the aluminum alloy powder preferably contains 0.2% by mass or more and 2.0% by mass or less of Mg.

When the Mg content is less than 0.2% by mass, there are concerns that the effect of breaking down the oxide coating film on the surface of the pure aluminum powder or the surface of the aluminum alloy powder may not be sufficient and that sufficient sintering properties for the starting material powder may not be obtained. When the Mg content exceeds 2.0% by mass, no effect of improving the sintering properties is seen with respect to the added amount of Mg. On the other hand, with respect to the breaking down of the oxide coating film, excess Mg is solidly dissolved in the aluminum. As a result, the melting point of the aluminum alloy decreases and thus the difference between the degreasing decomposition temperature and melting point of the binder component included when used for lamination molding becomes small. In such a case, the undecomposed residue of the binder component tends to remain on the surface of the starting material powder and may become a factor inhibiting sintering and thus there is a concern that sufficient sintering may not be obtained.

### [Bi content: 0.1% by mass or more and 1.0% by mass or less]

The aluminum alloy forming the aluminum alloy powder preferably contains 0.1% by mass or more and 1.0% by mass or less of Bi.

When the Bi content is less than 0.1% by mass, the effect of breaking down the oxide coating film on the surface of the aluminum alloy powder is not sufficient and the wettability of the produced melted liquid is also not sufficient and thus there is a concern that sufficient sintering of the starting material powder may not be obtained. When the Bi content exceeds 1.0% by mass, no improvement in the action and effect is expected with respect to the increase in the added amount of Bi and costs are increased, which is thus not preferable.

### [Powder particle size distribution; volume median diameter (D50): 12 µm or more and 50 µm or less]

In the present embodiment, the aluminum powder used as the starting material powder and the aluminum alloy powder added to the starting material powder preferably have a particle size distribution in which the volume median diameter (D50) is 12 µm or more and 50 µm or less.

When the volume median diameter (D50) of these powders is less than 12 µm, there are concerns that segregation of particles may be more likely to occur, that the filling density may decrease, that uneven sintering shrinkage may be more likely to occur, and that it may not be possible to hold the desired shape as a sintered body. When the volume median diameter (D50) exceeds 50 µm, the contact area between particles becomes small with respect to the particle volume and thus there are concerns that the rate of progress of sintering may be slowed and that it may be impossible to obtain a sufficient density as a sintered body.

The oxygen concentration included in the aluminum alloy powder is desirably 1.0% by mass or less. Due to the oxygen concentration being 1.0% by mass or less, even if an oxide coating film is formed on the powder surface, the oxide coating film is formed thinly on the powder surface and thus does not adversely affect the generation of the liquid phase during sintering. When the oxygen concentration exceeds 1.0% by mass, there are concerns that the oxide coating film may become excessively thick and may come to interfere with the generation of the liquid phase during sintering.

### [5% by mass or more and 30% by mass or less of aluminum alloy powder that has a lower melting point than the pure aluminum and the aluminum alloy, with respect to the starting material powder composed of pure aluminum or aluminum alloy]

The aluminum alloy powder that has a lower melting point than the pure aluminum and the aluminum alloy is preferably contained as 5% by mass or more and 30% by mass or less with respect to the starting material powder composed of pure aluminum or aluminum alloy.

When the content of aluminum alloy powder that has a low melting point is less than 5% by mass, the aluminum alloy powder for generating the liquid phase during sintering is reduced and thus there are concerns that the amount of the liquid phase generated may be reduced and the sintering may be insufficient. In a case where the content of the aluminum alloy powder that has a low melting point exceeds 30% by mass, there is a problem in that the amount of liquid phase during sintering may become excessive, the shape retention rate after sintering may be poor, and it may not be possible to obtain a sintered product with the desired shape.

The starting material powder may include aluminum alloy powder in addition to pure aluminum powder. The aluminum alloy powder included in the starting material powder desirably has a melting point of 650°C or higher in order to obtain a melting point difference with the aluminum alloy powder that has a low melting point.

In a case where aluminum alloy powder other than pure aluminum powder are included in the starting material powder, the oxygen concentration is desirably low to prevent the generation of an unnecessary thick oxide coating film and Mg and Bi are desirably contained to suppress the adverse effects on sintering if an oxide coating film is generated.

For example, in the aluminum alloy powder in the starting material powder, Mg is preferably contained as 0.2% by mass or more and 2.0% by mass or less. In addition to Mg, the aluminum alloy powder in the starting material powder, preferably contains 0.1% by mass or more and 1.0% by mass or less of Bi. The effectiveness of containing Mg and Bi is as explained earlier in the case where Mg and Bi are contained in the aluminum alloy powder.

### [Method for Producing Aluminum Sintered Body]

To produce aluminum sintered bodies using the aluminum powder mixture described above, it is possible to use a method in which the aluminum powder mixture is used as a raw material powder and filled into a mold having a predetermined shape, a method in which the raw material powder is selectively sprayed with a binder containing a thermosetting resin, a thermoplastic resin, or a photo-curing resin, and then repeatedly laminated, or the like.

It is possible to produce the pure aluminum powder for forming the aluminum powder mixture by a method such as a nitrogen gas atomization method as an example. It is possible to produce the aluminum alloy powder for forming the aluminum powder mixture by a nitrogen gas atomization method as an example.

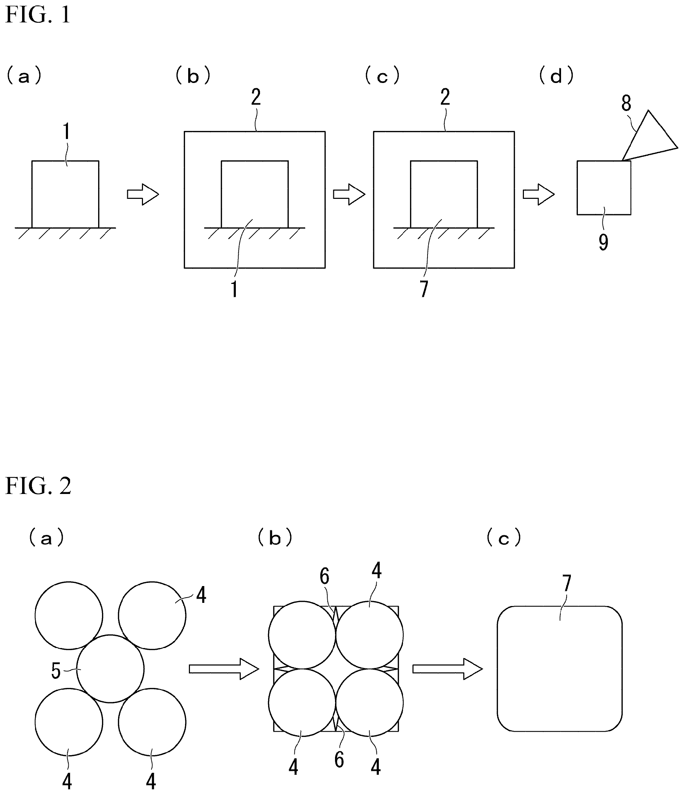

As one example, in a case where a powder is laminated to obtain a shape, it is possible to repeatedly laminate the raw material powder using selective binder spraying to realize the shape. Through repeated lamination, the raw material powder is solidly fixed such that the shape conforms to the desired three-dimensional shape. After solidly fixing the raw material powder, removal of unnecessary powder, degreasing, and the like are performed as necessary and, for example, a cube-shaped green body 1 shown in (a) of FIG. 1 is obtained.

Once the green body 1 is obtained, the green body 1 is housed in a heating furnace 2 as shown in (b) of FIG. 1 and heated to a temperature of approximately 580°C to 650°C in a vacuum atmosphere, reducing atmosphere or an inert gas atmosphere without pressure to carry out sintering.

By heating to a temperature in this range, a liquid phase is generated from the aluminum alloy powder that has a low melting point, which is added to and mixed with the starting material powder to be contained in the range of 5 to 30% by mass, the liquid phase wetly spreads to fill the gaps between the starting material powder, and it is possible to obtain isotropic shrinkage.

At this time, for the temperature increase rate, it is desirable to carry out the heating at a temperature increase rate of 10°C/min or less in the temperature region of 500°C or higher, where the generation of the liquid phase starts, in order to suppress the rapid generation of the liquid phase.

In order to further stabilize the wetting and spreading of the liquid phase, a heating step may be carried out in two or more stages with the object of accelerating solid phase sintering by holding the temperature at or below the temperature at which the liquid phase is generated and of stabilizing the gaps between the particles.

FIG. 2 is an explanatory diagram for modeling and showing a state in which, in a case where an aluminum powder mixture 3 is a mixture of a starting material powder 4 composed of pure aluminum powder and an aluminum alloy powder 5 having a lower melting point than the starting material powder 4, the aluminum powder mixture 3 is heated to a temperature of approximately 580°C to 650°C. The melting point of pure aluminum is approximately 660°C. In a case where the aluminum powder mixture 3 is heated to the temperature described above, a liquid phase 6 is generated from the aluminum alloy powder 5 that has a low melting point and the liquid phase 6 wetly spreads into the gaps between the starting material powder 4 that are present at the periphery thereof.

Since the melting point of the pure aluminum powder 4 is approximately 660°C, the entirety of the pure aluminum powder 4 does not completely melt in the temperature range described above, but the portions where the liquid phase 6 has wetly spread, which are portions of the interface between the pure aluminum powders 4, partially melt and fuse with each other, thus, when cooling is carried out after heating for a predetermined time, it is possible to finally obtain a dense sintered body 7, which is almost entirely melted and integrated, as shown in (c) of FIG. 2. (c) of FIG. 1 shows the state in which the sintered body 7 is generated in the heating furnace 2. It is possible to obtain a product sintered body 9 by processing the obtained sintered body 7 with cutting tools 8, carrying out finishing by surface polishing, and the like as necessary, as shown in (d) of FIG. 1.

The sintered body 7 or product sintered body 9 is manufactured by sintering the aluminum powder mixture 3 in which the starting material powder 4 is mixed with 5% by mass or more and 30% by mass or less of the aluminum alloy powder that has a low melting point and thus has a dense structure in which the liquid phase effectively fills the gaps between the starting material powder 4

For this reason, it is possible to obtain the well-shaped, highly relative dense sintered body 7 or product sintered body 9 that is close to the desired shape. For example, it is possible to obtain the sintered body 7 or the product sintered body 9 made of aluminum having the characteristics of a relative density of 85% or more and a thermal conductivity of 160 W/mK or more.

With the aluminum alloy powder 5 containing Si or Cu in the range described above with respect to aluminum, the melting point is lowered to be in the appropriate range with respect to pure aluminum, thus, it is possible to effectively generate the liquid phase 6 in a desirable amount in a case of heating to the temperature range described above to carry out sintering. In a case where the melting point of the aluminum alloy powder 5 is lowered with respect to the starting material powder 4, which is pure aluminum powder or the like, it is preferable to ensure a melting point difference of approximately 30°C.

When the aluminum alloy powder 5 contains Mg in the range described above, it is possible to sufficiently obtain the effect of breaking down the oxide coating film on the surface of the starting material powder and it is possible for the wetly spread liquid phase 6 to strongly bond the starting material powder 4, making it possible to obtain favorable sintering properties. Furthermore, when the aluminum alloy powder 5 contains Bi in the range described above, it is possible to more effectively obtain the effect of breaking down the oxide coating film on the surface of the starting material powder and to obtain favorable sintering properties.

For example, when a thick oxide coating film is generated on the outer surface of the starting material powder 4, there are concerns that this oxide coating film may inhibit the bonding of the starting material powder 4 by the generation of the liquid phase according to the liquid phase and may inhibit favorable sintering properties.

It is not the case that the greater the amount of the liquid phase generated, the better, but it is desirable to be able to ensure an appropriate amount. As one example, it is desirable to select a combination of compositions and sintering conditions such that the amount of liquid phase able to be estimated from the equilibrium state diagram of the aluminum alloy forming the aluminum alloy powder 5 to be applied and the amount of liquid phase assumed from the content of aluminum alloy powder 5 are approximately 10 to 30% of the total aluminum powder mixture.

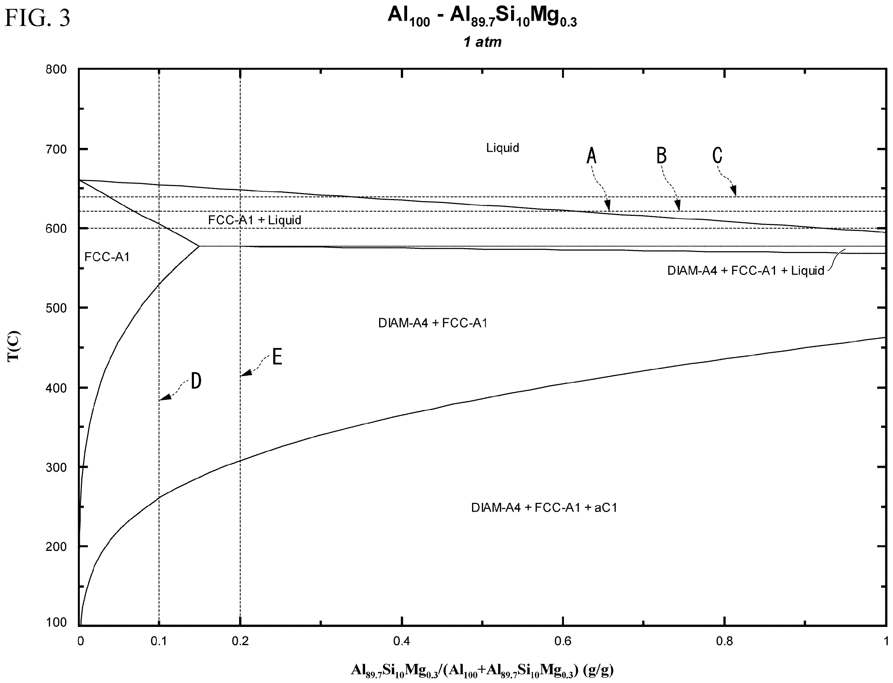

As an example, in a case of using pure aluminum powder and aluminum alloy powder having the composition Al_{89.7}Si₁₀Mg_{0.3}, auxiliary lines A, B, and C (chain lines in FIG. 3) are drawn parallel to the horizontal axis at the respective positions of temperatures 600°C, 620°C, and 640°C on the vertical axis in the interpretation from the equilibrium state diagram shown in FIG. 3 and the horizontal axis is set as Al_{89.7}Si₁₀Mg_{0.3}/(Al₁₀₀+Al_{89.7}Si₁₀Mg_{0.3}): (g/g). Auxiliary lines D and E (chain lines in FIG. 3) are also drawn parallel to the vertical axis at the 10% by mass position and 20% by mass position, in the ratio of the amount of aluminum alloy powder to the amount of pure aluminum in the composition.

From the interpretation of the state diagram shown in FIG. 3, for the case of the 10% mass ratio described above, the liquid phase amount is approximately 22.9% when 640°C is selected, approximately 5.5% by mass when 620°C is selected, and approximately 0% when 600°C is selected.

Similarly, for the case of the 20% mass ratio, the liquid phase amount is approximately 57.5% when 640°C is selected, approximately 22.7% by mass when 620°C is selected, and approximately 11.2% when 600°C is selected.

In this manner, it is possible to estimate the amount of the liquid phase to be generated from the state diagram showing the relationship between the temperature and the mass ratio of the pure aluminum powder and the aluminum alloy powder having a specific composition.

As described above, it is desirable to select a combination of compositions and sintering conditions such that the amount of the liquid phase assumed from the estimable amount of the liquid phase and the content of the aluminum alloy powder is approximately 10 to 30% of the total aluminum powder mixture.

In addition, using powders with a particle size distribution in the range described above as the starting material powder 4 and aluminum alloy powder 5 makes it possible to eliminate the segregation of particles and, as a result, it is possible to prevent a decrease in the filling density, to ensure the uniformity of sintering shrinkage, and to prevent uneven sintering shrinkage.

As a result of the above, it is possible to obtain a well-shaped, high-density aluminum sintered body which conforms to a desired shape and exhibits high thermal conductivity.

### EXAMPLES

Aluminum mixed powders of Examples 1 to 14 and Comparative Examples 1 to 6 were prepared by using a powder 1 and a powder 2 having the composition and average particle diameters shown in Table 1 and mixing the above in the ratios (mass ratios) shown in Table 1.

These aluminum mixed powders were each tap-filled into a graphite mold with internal dimensions of ϕ20 mm x H20 mm and then heated in a vacuum atmosphere, reducing atmosphere, or inert gas atmosphere at 580°C to 650°C for 120 minutes to obtain the sintered bodies of Examples 1 to 14 and Comparative Examples 1 to 6, as shown in Table 2. The physical property values (relative density, dimensions, and thermal conductivity of the sintered bodies) of each of the obtained sintered bodies were measured respectively. The measurement methods for each physical property value are shown below.

### [Measurement of Particle Size Distribution]

For the measurement of the particle size distribution of the aluminum mixed powder, the particle diameter distribution was measured by a wet method using "MT3300EX II" (trade name) manufactured by Microtrac and the volume median diameter (D50) was calculated as the average particle diameter from the obtained results.

### [Sintered Body Relative Density]

The density of the obtained sintered body was measured according to the method for measuring the density and specific gravity of solids specified in JIS standard number "JIS Z 8807". The obtained sintered body density was divided by the true density of the aluminum alloy having the powder mixture composition to obtain the relative density of the sintered body.

### [Alloying Element Added Amounts]

Each concentration of silicon (Si), copper (Cu), magnesium (Mg), and bismuth (Bi) in the powder 1 and the powder 2 forming the aluminum powder mixtures were respectively measured using an inductively coupled plasma emission spectrometer.

### [Oxygen Concentration]

The oxygen concentrations of the powder 1 and the powder 2 forming the aluminum powder mixture were respectively measured using the inert gas fusion-infrared absorption method.

### [Thermal Conductivity]

For the measurement of the thermal conductivity, the obtained sintered body was processed into a disk shape of ϕ10 mm x t2 mm and then the measurement was carried out by the laser flash method using "Xe Flash Analyzer LFA467 HyperFlash" (trade name) manufactured by Netzsch.

### [Outer Diameter Shrinkage Difference]

In such a case where an excessive amount of the liquid phase is generated in the obtained sintered body, the shape of the upper portion or lower portion of the sintered body swells outward in part. The diameter of the obtained sintered body was measured using a micrometer at three points of equal width in the height direction and a sample in which the difference in the sintering shrinkage rate of the diameter measurement values at the three points based on the molded product exceeded 2% was evaluated as "x", a sample having a difference of 1% to 2% or less was evaluated as "B", and a sample having a difference of less than 1% was evaluated as "A".

### [Melting Point Difference]

Using a differential scanning calorimeter (DSC), the apex of the endothermic peak generated by the melting of the aluminum powder mixture during heating from room temperature to 700°C in an argon gas atmosphere was set as the melting point and the difference M1-M2 (°C) between the melting point M1 (°C) of the powder 1 and M2 (°C) of the powder 2 was calculated as the melting point difference.

Among the above items, the composition and average particle diameter of the powder 1, the composition and average particle diameter of powder 2, and the mass mixing ratio of the powder 1 and the powder 2 are listed in Table 1. In addition, the sintering atmosphere, sintering temperature, sintered body density, thermal conductivity, and outer diameter shrinkage difference are shown in Table 2.

**[Table 1]**

| | No. | Powder 1 | | | | | Powder 2 | | | | | | | | Powder 1:Powder 2 Melting point difference |
|---|---|---|---|---|---|---|---|---|---|---|---|---|---|---|---|
| | | Mg | Bi | O | Al | Average particle diameter | Si | Cu | Mg | Bi | O | Al | Average particle diameter | Powder 1 :Powder 2 Mass mixing ratio | |
| | | | | | | /µm | | | | | | | /µm | 95:5 to 70:30 | |
| Examples | 1 | 0 | 0 | 0.2 | Balance | 20 | 10 | - | 0.5 | 0 | 0.2 | Balance | 30 | 90:10 | 92 |
| | 2 | 0 | 0 | 0.1 | Balance | 50 | 10 | - | 0.5 | 0 | 0.2 | Balance | 30 | 80:20 | 92 |
| | 3 | 0 | 0 | 0.5 | Balance | 15 | 10 | - | 0.5 | 0 | 0.2 | Balance | 30 | 70:30 | 92 |
| | 4 | 0 | 0 | 0.2 | Balance | 20 | 10 | - | 0.5 | 0 | 0.2 | Balance | 30 | 95:5 | 92 |
| | 5 | 0 | 0 | 0.2 | Balance | 20 | 5 | - | 1.0 | 0.2 | 0.2 | Balance | 20 | 80:20 | 54 |
| | 6 | 0 | 0 | 0.2 | Balance | 20 | - | 5 | 1.0 | 0.1 | 0.3 | Balance | 15 | 70:30 | 44 |
| | 7 | 0 | 0 | 0.2 | Balance | 20 | 10 | 10 | 1.0 | 0.5 | 0.5 | Balance | 50 | 95:5 | 110 |
| | 8 | 0 | 0 | 0.2 | Balance | 30 | 8 | - | 2.0 | 1.0 | 0.1 | Balance | 25 | 90:10 | 59 |
| | 9 | 0.5 | 0 | 0.6 | Balance | 20 | 12 | - | 0.2 | 0.0 | 0.2 | Balance | 25 | 80:20 | 70 |
| | 10 | 0.5 | 0 | 0.6 | Balance | 20 | 12 | - | 0.2 | 0.0 | 0.2 | Balance | 25 | 95:5 | 71 |
| | 11 | 0.5 | 0.1 | 0.7 | Balance | 30 | 10 | - | 0.5 | 0.2 | 0.3 | Balance | 25 | 90:10 | 84 |
| | 12 | 0.5 | 0.2 | 0.8 | Balance | 30 | 8 | - | 0.5 | 0.2 | 0.3 | Balance | 25 | 90:10 | 85 |
| | 13 | 0.3 | 0.1 | 0.3 | Balance | 20 | 10 | - | 0.5 | 0.2 | 0.3 | Balance | 20 | 90:10 | 86 |
| | 14 | 0 | 0 | 1.0 | Balance | 12 | 10 | - | 0.5 | 0 | 0.2 | Balance | 30 | 80:20 | 92 |
| Comparative Examples | 1 | 0 | 0 | 0.2 | Balance | 20 | 4 | - | 0.5 | 0 | 0.3 | Balance | 20 | 80:20 | 39 |
| | 2 | 0 | 0 | 0.2 | Balance | 20 | 15 | 10 | 0.5 | 0 | 0.6 | Balance | 40 | 90:10 | 129 |
| | 3 | 0 | 0 | 0.2 | Balance | 20 | 10 | - | 3.0 | 0 | 0.2 | Balance | 40 | 70:30 | 98 |
| | 4 | 0 | 0 | 0.2 | Balance | 20 | 10 | - | 0.1 | 0 | 0.4 | Balance | 20 | 90:10 | 89 |
| | 5 | 0 | 0 | 0.2 | Balance | 20 | 10 | - | 0.5 | 0 | 0.2 | Balance | 20 | 97:3 | 92 |
| | 6 | 0 | 0 | 0.2 | Balance | 20 | 10 | - | 0.5 | 0 | 0.2 | Balance | 20 | 65:35 | 92 |

**[Table 2]**

| | No. | Sintering conditions | | Sintered body evaluation | | |
|---|---|---|---|---|---|---|
| | | Sintering atmosphere | Sintering temperature | Sintered body relative density | Thermal conductivity | Outer diameter shrinkage difference |
| | | Ar or Vac. | 580 to 650 | 85% or more | 140> | 2% or less |
| Examples | 1 | Argon | 640 | 92.5% | 203.2 | A |
| | 2 | Vacuum | 630 | 93.6% | 195.8 | B |
| | 3 | Argon | 580 | 95.3% | 195.1 | B |
| | 4 | Vacuum | 650 | 90.7% | 196.8 | A |
| | 5 | Argon | 630 | 91.4% | 187.2 | A |
| | 6 | Argon | 640 | 89.3% | 179.7 | B |
| | 7 | Argon | 590 | 91.1% | 198.5 | B |
| | 8 | Argon | 610 | 92.1% | 195.9 | A |
| | 9 | Argon | 610 | 93.2% | 171.0 | B |
| | 10 | Argon | 640 | 92.5% | 188.1 | A |
| | 11 | Argon | 620 | 94.3% | 197.0 | A |
| | 12 | Argon | 620 | 92.5% | 184.6 | A |
| | 13 | Argon | 630 | 95.3% | 215.1 | A |
| | 14 | Argon | 600 | 90.7% | 172.3 | A |
| Comparative Examples | 1 | Argon | 640 | 79.3% | 98.8 | A |
| | 2 | Argon | 620 | 95.8% | 187.9 | x |
| | 3 | Vacuum | 590 | 95.8% | 136.7 | B |
| | 4 | Vacuum | 620 | 81.6% | 134.5 | B |
| | 5 | Argon | 620 | 75.9% | 92.3 | A |
| | 6 | Argon | 620 | 88.1% | 115.0 | x |

Examples 1 to 8 show examples in which pure aluminum powder is used as the powder 1 and aluminum alloy powder composed of an aluminum alloy having a composition of 5% by mass or more and 20% by mass or less of one or two of Si and Cu and 0.2 by mass or more and 2.0% by mass or less of Mg with a balance of aluminum and unavoidable impurities, or an aluminum alloy powder containing an additional 0.1 to 1.0% by mass of Bi in the compositions described above is used as the powder 2.

Examples 9 to 14 are examples in which a powder of an aluminum alloy to which at least one of Mg: 0.3 to 0.5% by mass and Bi: 0.1 to 0.2% by mass is added to aluminum is used as the powder 1 and the powder 2 is an example using the powder 2 described above. The average particle diameter of the powder 1 is 12 µm to 50 µm and the average particle diameter of the powder 2 is 15 µm to 50 µm.

These Examples 1 to 14 were excellent sintered bodies having a sintered body density of 2.30 or greater, thermal conductivity values exceeding 140, and an outer diameter shrinkage of 2% or less.

Thus, with a sintered body using the aluminum powder mixture in which the powder 1 and the powder 2 were set to the mass mixing ratio described above, it was possible to obtain a sintered body with high density, excellent thermal conductivity, and a shape that conformed to the desired shape without loss of shape.

In contrast to these Examples, Comparative Example 1 had a low Si content and did not obtain a sufficient sintering acceleration effect. In Comparative Example 2, the Si amount and Cu amount were high and the amount of liquid phase was excessive, resulting in a large difference in outer diameter shrinkage.

Comparative Example 3 was a sample having excessive Mg content and the thermal conductivity decreased due to the influence of the increased amount of solidly dissolved Mg in the aluminum and the influence of decreased density as a sintered body.

Comparative Example 4 was a sample having an excessively low Mg content and the density of the sintered body decreased.

In Comparative Example 5, the added amount of the powder 2 was excessively small with respect to the powder 1 and thus sufficient sintering did not occur.

Comparative Example 6 was a sample in which the added amount of the powder 2 was excessive with respect to the powder 1 and thus more liquid phase than necessary was generated during sintering, the difference in outer diameter shrinkage was large, and shape retention was difficult.

From the above comparison, it was found that it is possible to obtain excellent sintered bodies by adjusting the composition of the powder 1 and the powder 2 and sintering within an appropriate temperature range while adjusting the blending ratio of the powder 1 + the powder 2 and the average particle diameter to a specific range, as in the above Examples.

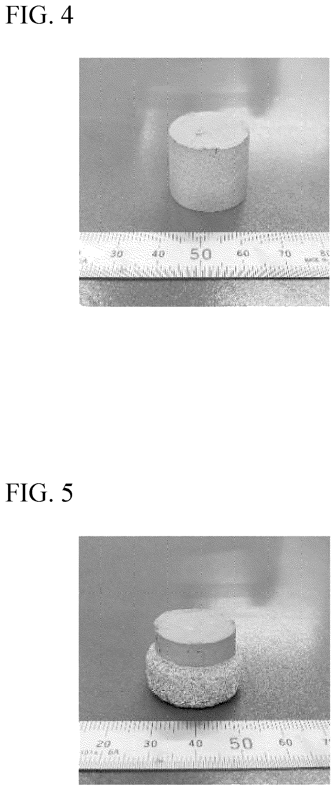

A photograph capturing the appearance of Example 1 is shown in FIG. 4. In addition, a photograph capturing the appearance of Comparative Example 4 is shown in FIG. 5. The sample shown in FIG. 4 was a well-shaped cylindrical shape and almost no change in diameter from the upper portion to the lower portion was observed. On the other hand, the sample shown in FIG. 5 had a cylindrical shape at the upper portion side, but the shape of the lower portion side was swollen all the way around, resulting in a large outer diameter shrinkage difference. From the above comparisons, it was considered necessary to control the amount of liquid phase to retain the shape of the sintered body and advantageous to produce the sintered body while carrying out densification with a minimum amount of liquid phase.

### INDUSTRIAL APPLICABILITY

According to the aluminum powder mixture of the present invention, it is possible to further accelerate sintering between powders (particles), to achieve high density as an aluminum sintered body and to obtain a sintered body that exhibits high electrical conductivity and high thermal conductivity and thus industrial application is possible.

### REFERENCE SIGNS LIST

1: Green body
2: Heating furnace
3: Aluminum powder mixture
4: Starting material powder
5: Aluminum alloy powder
6: Liquid phase
7: Sintered body
9: Product sintered body

## Claims

1. An aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy,
wherein the aluminum alloy powder is composed of an aluminum alloy which has a composition that contains 5% by mass or more and 20% by mass or less of one or two of Si and Cu, and 0.2% by mass or more and 2.0% by mass or less of Mg, with a balance of aluminum and unavoidable impurities.

2. The aluminum powder mixture according to claim 1,
wherein a difference in melting point between the starting material powder composed of the pure aluminum or the aluminum alloy and the aluminum alloy powder that has a lower melting point than the pure aluminum or the aluminum alloy, which form the aluminum powder mixture, is 40°C or more.

3. The aluminum powder mixture according to claim 1 or 2,
wherein the aluminum alloy forming the aluminum alloy powder includes 0.1% by mass or more and 1.0% by mass or less of Bi.

4. The aluminum powder mixture according to any one of claims 1 to 3,
wherein a volume median diameter (D50) of both the starting material powder and the aluminum alloy powder is 12 µm or more and 50 µm or less.

5. The aluminum powder mixture according to any one of claims 1 to 4,
wherein a concentration of oxygen included in the starting material powder composed of the pure aluminum or the aluminum alloy and the aluminum alloy powder is 1.0% by mass or less.

6. The aluminum powder mixture according to any one of claims 1 to 5, which is a raw material powder for powder metallurgy.

7. The aluminum powder mixture according to any one of claims 1 to 6, which is a raw material powder for metal additive manufacturing.

8. A method for producing an aluminum sintered body, comprising:
preparing as a raw material powder an aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy,
the aluminum alloy powder having a composition that contains 5% by mass or more and 20% by mass or less of at least one of Si and Cu, and 0.1% by mass or more and 2.0% by mass or less of Mg, with a balance of unavoidable impurities and aluminum,
the method comprising a step of filling the raw material powder into a mold and carrying out sintering in a vacuum atmosphere, in a reducing atmosphere, or in an inert gas atmosphere at a temperature of 580°C to 650°C.

9. A method for producing an aluminum sintered body, comprising:
preparing as a raw material powder an aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy,
the aluminum alloy powder having a composition that contains 5% by mass or more and 20% by mass or less of at least one of Si and Cu, and 0.1% by mass or more and 2.0% by mass or less of Mg, with a balance of unavoidable impurities and aluminum,
the method comprising a step of press-molding the raw material powder using a metal mold and then carrying out sintering in a vacuum atmosphere, in a reducing atmosphere, or in an inert gas atmosphere at a temperature of 580°C to 650°C.

10. A method for producing an aluminum sintered body, comprising:
preparing as a raw material powder an aluminum powder mixture obtained by mixing a starting material powder, which is composed of pure aluminum or an aluminum alloy, with 5% by mass or more and 30% by mass or less of an aluminum alloy powder that has a lower melting point than the pure aluminum or the aluminum alloy,
the aluminum alloy powder having a composition that contains 5% by mass or more and 20% by mass or less of at least one of Si and Cu, and 0.1% by mass or more and 2.0% by mass or less of Mg, with a balance of unavoidable impurities and aluminum,
the method comprising a step of forming a metal powder layer using the raw material powder, selectively spraying a binder containing a thermosetting resin, a thermoplastic resin or a photo-curing resin from a print head onto the metal powder layer, and repeatedly laminating the metal powder layer to obtain a metal powder green body solidly fixed to a desired three-dimensional shape; and
a step of sintering the metal powder green body in a vacuum atmosphere, in a reducing atmosphere, or in an inert gas atmosphere at a temperature of 580°C to 650°C, after performing steps of solidly fixing the binder, removing unnecessary powder, and carrying out degreasing.

11. The method for producing an aluminum sintered body according to any one of claims 8 to 10,
wherein an aluminum alloy sintered body having a relative density of 85% or more and a thermal conductivity of 160 W/mK or more is obtained.

12. The method for producing an aluminum sintered body according to any one of claims 8 to 11,
wherein the aluminum alloy forming the aluminum alloy powder includes 0.1% by mass or more and 1.0% by mass or less of Bi.
